# EUROPEAN PATENT APPLICATION

(11) **EP 4 749 898 A1**
(43) Date of publication of application: **27.05.2026**
(21) Application number: 25217067.5
(22) Date of filing: 19.11.2025
(51) Int. Cl.: H02M 1/00, H02M 3/00, H02M 3/335

(54) **METHOD FOR CONTROLLING THREE-PHASE RESONANT CIRCUIT AND RELATED APPARATUSES**

(30) Priority: 22.11.2024 CN 202411693653
(71) Applicant: Sungrow Charging Technology Co., Ltd., Hefei, Anhui 230088 (CN)
(72) Inventor: LI, Laibao, Hefei, 230088 (CN); ZHANG, Huali, Hefei, 230088 (CN); PENG, Xuanzhe, Hefei, 230088 (CN); ZHOU, Yue, Hefei, 230088 (CN); ZHANG, Peng, Hefei, 230088 (CN); JIA, Yicheng, Hefei, 230088 (CN)
(74) Representative: Rooney, John-Paul

(57) **Abstract**

A method for controlling a three-phase resonant circuit and related apparatuses are provided, relating to the technical field of circuit control. The method includes: obtaining a target error value, where the target error value is a difference between a reference value of a predetermined electrical parameter of the three-phase resonant circuit and a sampled value of the predetermined electrical parameter of the three-phase resonant circuit; adjusting, in responding to the target error value being greater than or less than 0, an operation parameter of the three-phase resonant circuit to cause the target error value to be 0; and switching, in responding to the target error value being greater than or less than 0, an operation mode of the three-phase resonant circuit from a current mode to a target mode after the operation parameter has been adjusted to a preset value, where the target mode includes a three-phase continuous mode, a three-phase hiccup mode, a two-phase hiccup mode or a two-phase variable duty cycle mode.

## Description

### FIELD

The present disclosure relates to the technical field of circuit control, in particular to a method for controlling a three-phase resonant circuit and related apparatuses.

### BACKGROUND

A three-phase resonant circuit optimizes circuit performance based on the principle of resonance, and it is widely implemented in products such as charging piles due to its high-power output capability which facilitates fast charging.

At present, a variable frequency control is generally performed on a three-phase resonant circuit to adjust an output frequency of the three-phase resonant circuit. A gain of the three-phase resonant circuit decreases in a monotonic interval as the output frequency increases. However, change of the gain decreases as the output frequency increases, which results in decreasing in output stability of the three-phase resonant circuit.

### SUMMARY

In view of the above problems, a method for controlling a three-phase resonant circuit and related apparatuses are provided in the present disclosure to effectively decrease a target error value between a reference value of a predetermined electrical parameter of the three-phase resonant circuit and a sampled value of the predetermined electrical parameter of the three-phase resonant circuit, thereby achieving stable output of the three-phase resonant circuit. Specific solutions are as follows.

In a first aspect, a method for controlling a three-phase resonant circuit is provided in the present disclosure. The method includes:
obtaining a target error value, where the target error value is a difference between a reference value of a predetermined electrical parameter of the three-phase resonant circuit and a sampled value of the predetermined electrical parameter of the three-phase resonant circuit;
adjusting, in responding to the target error value being greater than or less than 0, an operation parameter of the three-phase resonant circuit to cause the target error value to be 0; and
switching, in responding to the target error value being greater than or less than 0, an operation mode of the three-phase resonant circuit from a current mode to a target mode after the operation parameter has been adjusted to a preset value, where the target mode includes one of: a three-phase continuous mode, a three-phase hiccup mode, a two-phase hiccup mode or a two-phase variable duty cycle mode.

In an embodiment, the current mode is the three-phase continuous mode, where the adjusting, in responding to the target error value being greater than or less than 0, an operation parameter of the three-phase resonant circuit includes:
increasing, in responding to the target error value being less than 0, an output frequency of the three-phase resonant circuit,
where the switching, in responding to the target error value being greater than or less than 0, an operation mode of the three-phase resonant circuit from a current mode to a target mode after the operation parameter has been adjusted to a preset value includes:
   switching, in responding to the target error value being less than 0, the operation mode of the three-phase resonant circuit from the three-phase continuous mode to the three-phase hiccup mode after the output frequency of the three-phase resonant circuit has been increased to a preset frequency upper limit.

In an embodiment, the current mode is the three-phase continuous mode, where the adjusting, in responding to the target error value being greater than or less than 0, an operation parameter of the three-phase resonant circuit includes:
decreasing, in responding to the target error value being greater than 0, an output frequency of the three-phase resonant circuit, until the output frequency of the three-phase resonant circuit is decreased to a preset frequency lower limit or the target error value is less than or equal to 0.

In an embodiment, the current mode is the three-phase hiccup mode, where the adjusting, in responding to the target error value being greater than or less than 0, an operation parameter of the three-phase resonant circuit includes:
shortening, in responding to the target error value being less than 0, a hiccup period of the three-phase resonant circuit in the three-phase hiccup mode,
where the switching, in responding to the target error value being greater than or less than 0, an operation mode of the three-phase resonant circuit from a current mode to a target mode after the operation parameter has been adjusted to a preset value includes:
   switching, in responding to the target error value being less than 0, the operation mode of the three-phase resonant circuit from the three-phase hiccup mode to the two-phase hiccup mode after the hiccup period in the three-phase hiccup mode has been shortened to a first hiccup period lower limit.

In an embodiment, the current mode is the three-phase hiccup mode, where the adjusting, in responding to the target error value being greater than or less than 0, an operation parameter of the three-phase resonant circuit includes:
extending, in responding to the target error value being greater than 0, a hiccup period of the three-phase resonant circuit in the three-phase hiccup mode,
where the switching, in responding to the target error value being greater than or less than 0, an operation mode of the three-phase resonant circuit from a current mode to a target mode after the operation parameter has been adjusted to a preset value includes:
   switching, in responding to the target error value being greater than 0, the operation mode of the three-phase resonant circuit from the three-phase hiccup mode to the three-phase continuous mode after the hiccup period in the three-phase hiccup mode has been extended to a first hiccup period upper limit.

In an embodiment, the current mode is the two-phase hiccup mode, where the adjusting, in responding to the target error value being greater than or less than 0, an operation parameter of the three-phase resonant circuit includes:
shortening, in responding to the target error value being less than 0, a hiccup period of the three-phase resonant circuit in the two-phase hiccup mode,
where the switching, in responding to the target error value being greater than or less than 0, an operation mode of the three-phase resonant circuit from a current mode to a target mode after the operation parameter has been adjusted to a preset value includes:
   switching, in responding to the target error value being less than 0, the operation mode of the three-phase resonant circuit from the two-phase hiccup mode to the two-phase variable duty cycle mode after the hiccup period in the two-phase hiccup mode has been shortened to a second hiccup period lower limit.

In an embodiment, the current mode is the two-phase hiccup mode, where the adjusting, in responding to the target error value being greater than or less than 0, an operation parameter of the three-phase resonant circuit includes:
extending, in responding to the target error value being greater than 0, a hiccup period of the three-phase resonant circuit in the two-phase hiccup mode 0,
where the switching, in responding to the target error value being greater than or less than 0, an operation mode of the three-phase resonant circuit from a current mode to a target mode after the operation parameter has been adjusted to a preset value includes:
   switching, in responding to the target error value being greater than 0, the operation mode of the three-phase resonant circuit from the two-phase hiccup mode to the three-phase hiccup mode after the hiccup period in the two-phase hiccup mode has been extended to a second hiccup period upper limit.

In an embodiment, the current mode is the two-phase variable duty cycle mode, where the adjusting, in responding to the target error value being greater than or less than 0, an operation parameter of the three-phase resonant circuit includes:
increasing, in responding to the target error value being greater than 0, an output duty cycle of the three-phase resonant circuit,
where the switching, in responding to the target error value being greater than or less than 0, an operation mode of the three-phase resonant circuit from a current mode to a target mode after the operation parameter has been adjusted to a preset value includes:
   switching, in responding to the target error value being greater than 0, the operation mode of the three-phase resonant circuit from the two-phase variable duty cycle mode to the two-phase hiccup mode after the output duty cycle of the three-phase resonant circuit has been increased to a preset duty cycle upper limit.

In an embodiment, the current mode is the two-phase variable duty cycle mode, where the adjusting, in responding to the target error value being greater than or less than 0, an operation parameter of the three-phase resonant circuit includes:
decreasing, in responding to the target error value being less than 0, an output duty cycle of the three-phase resonant circuit,
where the method for controlling the three-phase resonant circuit further includes:
   performing, in responding to the target error value being less than 0, pulse blocking on the three-phase resonant after the output duty cycle of the three-phase resonant circuit has been decreased to a preset duty cycle lower limit.

In an embodiment, in responding to the current mode being the three-phase continuous mode, the target mode is the three-phase hiccup mode;
in responding to the current mode being the three-phase hiccup mode, the target mode is the three-phase continuous mode or the two-phase hiccup mode;
in responding to the current mode being the two-phase hiccup mode, the target mode is the three-phase hiccup mode or the two-phase variable duty cycle mode; and
in responding to the current mode being the two-phase variable duty cycle mode, the target mode is the two-phase hiccup mode.

In a second aspect, a controller is provided in the present disclosure. The controller includes: at least one processor and a memory connected to the processor, where:
the memory is configured to store a computer program; and
the processor is configured to execute the computer program to enable the controller to implement the method for controlling the three-phase resonant circuit described in the first aspect or in any implementation method in the first aspect.

In a third aspect, a three-phase resonant circuit is provided in the present disclosure. The three-phase resonant circuit includes: a main circuit and the controller described in the second aspect,
where the main circuit is connected to the controller.

In a fourth aspect, a charging pile is provided in the present disclosure. The charging pile includes the three-phase resonant circuit described in the third aspect.

Based on the above technical solutions, in the method for controlling the three-phase resonant circuit and related devices according to the present disclosure, in responding to the target error value being greater than or less than 0, the operation parameter of the three-phase resonant circuit is adjusted to cause the target error value to be 0. The operation mode of the three-phase resonant circuit is switched from the current mode to the target mode, in responding to the target error value being greater than or less than 0 when the operation parameter is adjusted to the preset value. The target mode includes the three-phase continuous mode, the three-phase hiccup mode, the two-phase hiccup mode or the two-phase variable duty cycle mode. That is, the target error value is adjusted by adjusting the output frequency, the three-phase hiccup period, the two-phase hiccup period or the output duty cycle in the two-phase operation mode for the three-phase resonant circuit, so that the three-phase resonant circuit is closed-loop controlled in the whole operation range, the three-phase resonant circuit is guaranteed to output stably, and a problem of increasing the switching loss and driving loss of the three-phase resonant circuit caused by controlling the three-phase resonant circuit totally based on the output frequency is solved.

### BRIEF DESCRIPTION OF THE DRAWINGS

The above and other features, advantages and aspects of the embodiments of the present disclosure would be more apparent in conjunction with the drawings and with reference to the following embodiments. The same or similar reference numerals throughout the drawings represent the same or similar elements. It should be understood that the drawings are schematic and the components and elements are unnecessarily drawn to scale.
FIG. 1 is a flowchart showing a method for controlling a three-phase resonant circuit according to an embodiment of the present disclosure;
FIG. 2 is a schematic diagram showing a control logic for a three-phase resonant circuit according to an embodiment of the present disclosure;
FIG. 3 is a schematic diagram showing switching among four control modes for a three-phase resonant circuit according to an embodiment of the present disclosure;
FIG. 4 is a schematic structural diagram of an apparatus for controlling a three-phase resonant circuit according to an embodiment of the present disclosure; and
FIG. 5 is a schematic structural diagram of a controller according to an embodiment of the present disclosure.

### DETAILED DESCRIPTION

The embodiments of the present disclosure would be described as follows in conjunction with the drawings in the embodiments of the present disclosure. The terms in the embodiments of the present disclosure are only for the purpose of explaining specific embodiments of the present disclosure, rather than limiting the present disclosure.

The embodiments of the present disclosure are described hereinafter in combination with the drawings. Those skilled in the art should understand that the technical solutions provided according to the embodiments of the present disclosure are still applicable to similar technical problems, despite the development of technologies and the emergence of different application scenarios.

In the specification, the claims and the drawings of the present disclosure, terms such as "first" and "second" are merely for distinguishing similar objects rather than describing a specific order or sequence. It should be understood that the terms used in this way may be interchanged in appropriate cases, and the terms are used to distinguish objects with the same attributes in the embodiments of the present disclosure in describing the objects. In addition, the terms "include" and "comprise" and any variations thereof are intended to be non-exclusive, so that a process, method, system, product or device including a series of units includes not only the units but also other units that are not enumerated, or also includes units inherent in the process, method, product or device.

A method for controlling a three-phase resonant circuit is provided in an embodiment of the present disclosure. Hereinafter, the method for controlling the three-phase resonant circuit according to the embodiment of the present disclosure is described in detail with reference to the drawings.

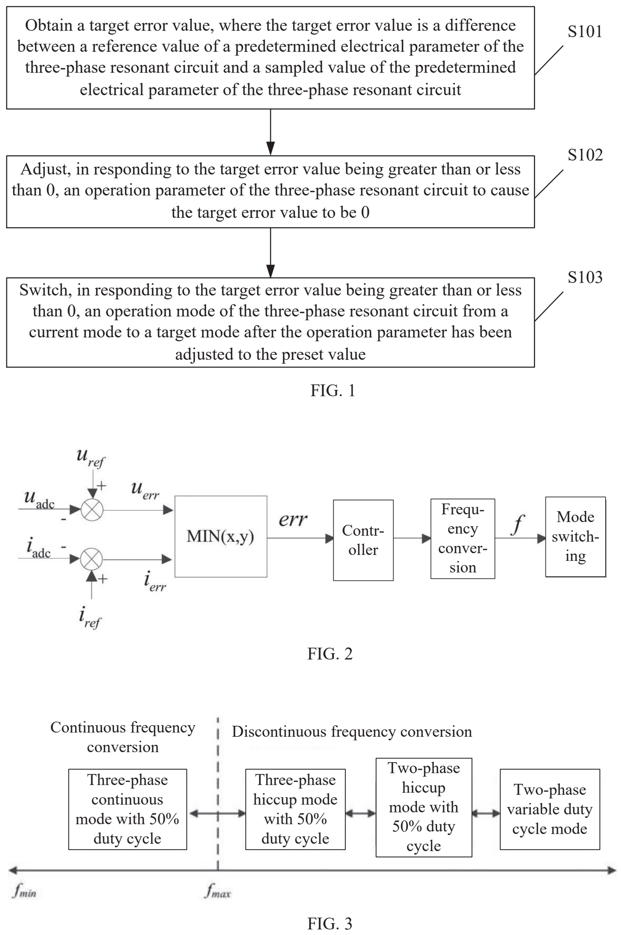

Reference is made to FIG. 1, which is a flowchart showing the method for controlling the three-phase resonant circuit according to an embodiment of the present disclosure. As shown in FIG. 1, the method for controlling the three-phase resonant circuit according to the embodiment of the present disclosure may include steps 101 to 103, and the steps would be described in detail below, respectively.

In step 101, a target error value is obtained, where the target error value is a difference between a reference value of a predetermined electrical parameter of the three-phase resonant circuit and a sampled value of the predetermined electrical parameter of the three-phase resonant circuit.

The three-phase resonant circuit may be a three-phase Inductor-Inductor-Capacitor (LLC) circuit, a three-phase Capacitor-Inductor-Capacitor (CLC) circuit, or the like.

The predetermined electrical parameter may be a current, a voltage. The predetermined electrical parameter may also be an electrical parameter with a smallest difference between a reference value and a sampled value.

In an embodiment, referring to FIG. 2, a difference uₑᵣᵣ between a voltage reference value u_{ref} and a voltage sampled value u_{adc} is calculated, a difference iₑᵣᵣ between a current preset value i_{ref} and a current sampled value i_{adc} is calculated, and a minimum value MIN (uₑᵣᵣ, iₑᵣᵣ) among the difference uₑᵣᵣ and the difference iₑᵣᵣ is determined as the target error value err.

In step 102, an operation parameter of the three-phase resonant circuit is adjusted to cause the target error value to be 0, in responding to the target error value being greater than or less than 0.

In the embodiment of the present disclosure, the three-phase resonant circuit has multiple operation modes, such as: a three-phase continuous mode, a three-phase hiccup mode, a two-phase hiccup mode, and a two-phase variable duty cycle mode. The three-phase continuous mode refers to that all three phases of the three-phase resonant circuit operate and generate waves continuously (for example, output Pulse Width Modulation (PWM) waves continuously), and a frequency of the three-phase resonant circuit is adjustable. The three-phase hiccup mode refers to that all three phases of the three-phase resonant circuit operate and generate waves discontinuously (when generating waves, it is called a hiccup, and the sum of a hiccup period and a non-hiccup period is referred as a hiccup control cycle), and the frequency of the three-phase resonant circuit is non-adjustable in this mode. The two-phase hiccup mode refers to that two phases of the three phase resonant circuit operate and generate waves discontinuously (when generating waves, it is called a hiccup, and the sum of a hiccup period and a non-hiccup period is referred as a hiccup control cycle), and the frequency of the three-phase resonant circuit is non-adjustable in this mode. The two-phase variable duty cycle mode refers to that two phases of the three-phase resonant circuit operate, the frequency of the three-phase resonant circuit is non-adjustable, and a duty cycle of the three-phase resonant circuit is adjustable in this mode.

Operation parameters of the three-phase resonant circuit adjusted in different operation modes are different, for example:
in responding to the current mode of the three-phase resonant circuit being the three-phase continuous mode, an output frequency of the three-phase resonant circuit is adjusted;
in responding to the current mode of the three-phase resonant circuit being the three-phase hiccup mode, a hiccup period of the three-phase resonant circuit in the three-phase hiccup mode is adjusted;
in responding to the current mode of the three-phase resonant circuit being the two-phase hiccup mode, a hiccup period of the three-phase resonant circuit in the two-phase hiccup mode is adjusted; and
in responding to the current mode of the three-phase resonant circuit being the two-phase variable duty cycle mode, an output duty cycle of the three-phase resonant circuit is adjusted.

In an embodiment, the current mode is the three-phase continuous mode. Referring to FIG. 2, in responding to the target error value err being greater than or less than 0, a controller generates a control signal based on the target error value err, where the control signal is configured to cause the target error value err to be 0. Frequency conversion is performed on the control signal to obtain an adjusted frequency *f*, and then closed-loop control is performed on the three-phase resonant circuit based on the frequency, to cause the target error value err to be 0.

In step 103, the operation mode of the three-phase resonant circuit is switched from a current mode to a target mode in responding to the target error value being greater than or less than 0 after the operation parameter has been adjusted to a preset value.

The target mode includes one of a three-phase continuous mode, a three-phase hiccup mode, a two-phase hiccup mode, or a two-phase variable duty cycle mode, where an initial mode of the three-phase resonant circuit is the three-phase continuous mode.

In an embodiment, the current mode is the three-phase continuous mode. Referring to FIG. 2, in the process of adjusting the frequency, in responding to the target error value being greater than or less than 0 when the operation parameter is adjusted to the preset value, the operation mode of the three-phase resonant circuit is switched from the three-phase continuous mode to the target mode, that is, in the three-phase continuous mode, whether to change the operation mode of the three-phase resonant circuit is determined based on factors such as frequency. The target mode may be the three-phase hiccup mode, the two-phase hiccup mode or the two-phase variable duty cycle mode. By shortening the hiccup period in the three-phase hiccup mode, shortening the hiccup period in the two-phase hiccup mode, or decreasing the output duty cycle for two-phase duty cycle mode, the target error value is continuously decreased, and stable output of the three-phase resonant circuit is achieved. In addition, the output frequency would not be increased after the output frequency of the three-phase resonant circuit has been increased to a preset frequency upper limit,, and the switching loss and driving loss of the three-phase resonant circuit is decreased.

Although the target error value is able to be decreased by controlling the three-phase resonant circuit to switch from the three-phase continuous mode to any one of the three-phase hiccup mode, the two-phase hiccup mode, or the two-phase variable duty cycle mode, controlling the three-phase resonant circuit to switch from the three-phase continuous mode to the three-phase hiccup mode is smoother, therefore it may be adopted as a preferred mode switching method.

Similarly, after the operation parameter in the three-phase hiccup mode has been adjusted to the preset value, if the target error value is greater than or less than 0, the target error value may be decreased by switching the operation mode of the three-phase resonant circuit from the three-phase hiccup mode to the two-phase hiccup mode or the two-phase variable duty cycle mode, and a smoother mode switching method of controlling the operation mode of the three-phase resonant circuit to switch from the three-phase hiccup mode to the two-phase hiccup mode may be adopted as a preferred mode switching method.

In an embodiment, in responding to the current mode being the three-phase continuous mode, the target mode is the three-phase hiccup mode;
in responding to the current mode being the three-phase hiccup mode, the target mode is the three-phase continuous mode or the two-phase hiccup mode;
in responding to the current mode being the two-phase hiccup mode, the target mode is the three-phase hiccup mode or the two-phase variable duty cycle mode; and
in responding to the current mode being the two-phase variable duty cycle mode, the target mode is the two-phase hiccup mode.

The switching sequence of the operation mode of the three-phase resonant circuit is from the three-phase continuous mode to the three-phase hiccup mode, to the two-phase hiccup mode, and to the two-phase duty cycle mode. In this switching sequence of the operation mode, the gain shows a monotonic change trend, full-range output conditions of the three-phase resonant circuit are covered, so that a full-range control output from light load to full load in a wide voltage range is achieved, thereby effectively decreasing ripples under light load and no-load, and improving output stability under light load and no-load.

The operation parameters of the three-phase resonant circuit adjusted in different operation modes are different, and adjustment directions of the operation parameters for a case that the target error value is less than 0 and for a case that the target error value is greater than 0 are different. Therefore, types of preset values to which the operation parameters of the three-phase resonant circuit are adjusted are different in different operation modes. In the same operation mode, preset values corresponding to the target error value being less than 0 and the target error value being greater than 0 are different.

For example, in responding to the current mode of the three-phase resonant circuit being the three-phase hiccup mode, the adjusted operation parameter is the hiccup period of the three-phase resonant circuit in the three-phase hiccup mode. In responding to the target error value being less than 0, the hiccup period of the three-phase resonant circuit is shortened in the three-phase hiccup mode. When the hiccup period of the three-phase resonant circuit in the three-phase hiccup mode is shortened to the preset value (a first hiccup period lower limit), in responding to the target error value being still less than 0, the operation mode of the three-phase resonant circuit is switched from the three-phase hiccup mode to the two-phase hiccup mode. In responding to the target error value being greater than 0, the hiccup period of the three-phase resonant circuit is extended in the three-phase hiccup mode. When the hiccup period of the three-phase resonant circuit in the three-phase hiccup mode is extended to the preset value (a first hiccup period upper limit), in responding to the target error value being still greater than 0, the operation mode of the three-phase resonant circuit is switched from the three-phase hiccup mode to the three-phase continuous mode.

It can be seen that in the method for controlling the three-phase resonant circuit according to the present embodiment, in responding to the target error value being greater than or less than 0, the operation parameter of the three-phase resonant circuit is adjusted to cause the target error value to be 0. The operation mode of the three-phase resonant circuit is switched from the current mode to the target mode, in responding to the target error value being greater than or less than 0 when the operation parameter is adjusted to the preset value. The target mode includes the three-phase continuous mode, the three-phase hiccup mode, the two-phase hiccup mode or the two-phase variable duty cycle mode. That is, the target error value is adjusted by adjusting the output frequency, the three-phase hiccup period, the two-phase hiccup period or the output duty cycle in the two-phase operation mode for the three-phase resonant circuit, so that the three-phase resonant circuit is closed-loop controlled in the whole operation range, the stable output of the three-phase resonant circuit is guaranteed to output stably, and a problem of increasing the switching loss and driving loss of the three-phase resonant circuit caused by controlling the three-phase resonant circuit totally based on the output frequency is solved.

Hereinafter, the switching sequence of the operation mode of the three phase resonant circuit is exemplified as: from the three-phase continuous mode, to the three-phase hiccup mode, to the two-phase hiccup mode, and to the two-phase variable duty cycle mode for a detailed introduction.

As shown in FIG. 3, the initial mode of three-phase resonant circuit is the three-phase continuous mode. In responding to the target error value being less than 0 and the output frequency of the three-phase resonant circuit is less than the preset frequency upper limit, the three-phase resonant circuit is in the three-phase continuous mode. In the three-phase continuous mode, all the three phases of the three-phase resonant circuit operate, no hiccup period occurs, and the output duty cycle remains unchanged. The output duty cycle is a preset duty cycle (the output duty cycle being 50% is taken as an example in FIG. 3). The target error value is adjusted by adjusting the output frequency, and an adjustment range of the output frequency is from the preset frequency lower limit fₘᵢₙ to the preset frequency upper limit fₘₐₓ. In responding to the target error value being equal to 0, it indicates that an actual output value of the three-phase resonant circuit is equal to the preset value, and the control mode is not required to be changed. In responding to the target error value being greater than 0, it indicates that the actual output value of the three-phase resonant circuit is less than the preset value, and the output frequency is adjusted in a direction to low frequency, that is, the output frequency of the three-phase resonant circuit is decreased. When the output frequency is decreased to the preset frequency lower limit fₘᵢₙ, in responding to the target error value being greater than 0, the output frequency is not further adjusted, and mode switching is not performed. In responding to the target error value being less than 0, it indicates that the actual output value of the three-phase resonant circuit is greater than the preset value, and the output frequency is adjusted in a direction to high frequency, that is, the output frequency of three-phase resonant circuit is increased. When the output frequency is increased to the preset frequency upper limit fₘₐₓ, in responding to the target error value being less than 0, the three-phase resonant circuit is controlled to be switched from the three-phase continuous mode to the three-phase hiccup mode. The preset frequency upper limit value fₘₐₓ and the preset frequency lower limit fₘᵢₙ described above may be set based on specific application scenarios.

In the three-phase hiccup mode, all the three phases of the three-phase resonant circuit operate, the output duty cycle remains unchanged and is output as the preset duty cycle, and the output frequency also remains unchanged and is always output as fₘₐₓ. The target error value is adjusted by adjusting the hiccup period of the three-phase resonant circuit in the three-phase hiccup mode, and an adjustment range of the hiccup period is from the first hiccup period lower limit tₘᵢₙ₁ to the first hiccup period upper limit tₘₐₓ₁. In responding to the target error value being less than 0, the hiccup period is shortened, that is, the hiccup period is adjusted in a direction to the first hiccup period lower limit tₘᵢₙ₁. In responding to t being equal to tₘᵢₙ₁, and the target error value being less than 0, the three-phase resonant circuit is controlled to be switched from the three-phase hiccup mode to the two-phase hiccup mode. The first hiccup period lower limit tₘᵢₙ₁ and the first hiccup period upper limit tₘₐₓ₁ may be set based on specific application scenarios.

In the two-phase hiccup mode, two phases of the three-phase resonant circuit operate, the output duty cycle remains unchanged and is output as the preset duty cycle, and the output frequency remains unchanged and is output as fₘₐₓ. Compared with the three-phase hiccup mode, the three-phase resonant circuit is switched from three-phase operation to two-phase operation. The target error value is adjusted by adjusting the hiccup period of the three-phase resonant circuit in the two-phase hiccup mode, and the adjustment range of the hiccup period is from the second hiccup period lower limit tₘᵢₙ₂ to the second hiccup period upper limit tₘₐₓ₂. In responding to the target error value being less than 0, the hiccup period is shortened, that is, the hiccup period is adjusted in a direction to the second hiccup period lower limit tₘᵢₙ₂. In responding to t being equal to tₘᵢₙ₂, and the target error value being less than 0, the three-phase resonant circuit is controlled to be switched from the two-phase hiccup mode to the two-phase variable duty cycle mode. The second hiccup period lower limit tₘᵢₙ₂ and the second hiccup period upper limit tₘₐₓ₂ may be set based on specific application scenarios.

In the three-phase hiccup mode and the two-phase hiccup mode described above, the three-phase resonant circuit operates discontinuously, that is, generates waves discontinuously. Generating PWM waves is taken as an example. A hiccup cycle is a sum of a time period of generating PWM waves (a hiccup period) and a time period of stopping generating PWM waves (a shutdown period). In the three-phase hiccup mode and the two-phase hiccup mode, the time period that the three-phase resonant circuit generates waves continuously is decreased through shortening the hiccup period, and an output voltage and an output current of the three-phase resonant circuit may be significantly decreased, thereby continuing to decrease the target error value.

In the two-phase variable duty cycle mode, two phases of the three-phase resonant circuit operate, the output frequency remains unchanged and is always output as the fₘₐₓ, and the hiccup period remains unchanged and is always output as the second hiccup period lower limit tₘᵢₙ₂. In the two-phase variable duty cycle mode, the target error value is adjusted by adjusting the output duty cycle of the three-phase resonant circuit, and an adjustment range of the duty cycle is from the preset duty cycle lower limit dₘᵢₙ to the preset duty cycle upper limit dₘₐₓ. In responding to the target error value being less than 0, the output duty cycle d is decreased, that is, the output duty cycle d is adjusted in a direction to the preset duty cycle lower limit dₘᵢₙ. By decreasing the output duty cycle, a turn-on period of a switching device (such as a Metal-Oxide-Semiconductor Field-Effect Transistor (MOSFET)) within one switching cycle is decreased, and the output voltage and output current of the three-phase resonant circuit are decreased, thereby continuing to decrease the target error value.

Due to the introduction of the two-phase hiccup mode and the two-phase variable duty cycle mode, an operating interval of hiccup is decreased, ripple performance under low voltage and light load is improved, an operation range of an inductive zone is increased, and overall machine loss and a thermal performance indicator are decreased.

Furthermore, in the two-phase variable duty cycle mode, when the output duty cycle d is decreased to the preset duty cycle lower limit dₘᵢₙ, if the target error value is less than 0, pulse blocking is performed on the three-phase resonant circuit (that is, all switches of the three-phase resonant circuit are turned off). After performing pulse blocking, in responding to the target error value being greater than 0, pulse blocking is stopped, and control logic of the two-phase variable duty cycle mode is continued to be implemented.

Furthermore, the switching sequence of the operation mode from the three-phase continuous mode, to the three-phase hiccup mode, to the two-phase hiccup mode, and to the two-phase variable duty cycle mode may be switched in reverse.

In an embodiment, in the two-phase variable duty cycle mode, two phases of the three-phase resonant circuit operate, the output frequency remains unchanged and is always output as the fₘₐₓ, and the hiccup period remains unchanged and is always output as the second hiccup period lower limit tₘᵢₙ₂. In responding to the target error value being greater than 0, the output duty cycle d is adjusted in a direction to the preset duty cycle upper limit dₘₐₓ. In responding to d being equal to dₘₐₓ, and the target error value being greater than 0, the three-phase resonant circuit is controlled to be switched from the two-phase variable duty cycle mode to the two-phase hiccup mode.

In the two-phase hiccup mode, two phases of the three-phase resonant circuit operate, the output duty cycle remains unchanged and is output as the preset duty cycle, and the output frequency remains unchanged and is always output as the fₘₐₓ. In responding to the target error value being greater than 0, the hiccup period is extended, that is, the hiccup period t is adjusted in a direction to the second hiccup period upper limit tₘₐₓ₂. In responding to t being equal to tₘₐₓ₂, and the target error value being greater than 0, the three-phase resonant circuit is controlled to be switched from the two-phase hiccup mode to the three-phase hiccup mode.

In the three-phase hiccup mode, all the three phases of the three-phase resonant circuit operate, the output duty cycle remains unchanged and is output as the preset duty cycle, and the output frequency remains unchanged and is always output as the fₘₐₓ. In responding to the target error value being greater than 0, the hiccup period is extended, that is, the hiccup period t is adjusted in a direction to the first hiccup period upper limit tₘₐₓ₁. In responding to t being equal to tₘₐₓ₁, and the target error value being greater than 0, the three-phase resonant circuit is controlled to be switched from the three-phase hiccup mode to the three-phase continuous mode.

It can be seen that in the method for controlling the three-phase resonant circuit disclosed in this embodiment, a hysteresis region exists between two modes. For example, it is switched to the two-phase hiccup mode in responding to the output duty cycle in the two-phase variable duty cycle mode being increased to dₘₐₓ and the target error value is greater than 0; it is switched to the two-phase variable duty cycle mode in responding to the hiccup period in the two-phase hiccup mode being shortened to tₘᵢₙ₂ and the target error value is less than 0, and it is switched to the three-phase hiccup mode, in responding to the hiccup period being extended to tₘₐₓ₂ and the target error value is greater than 0; it is switched to the two-phase hiccup mode in responding to the hiccup period in the three-phase hiccup mode being shortened to tₘᵢₙ₁ and the target error value is less than 0; and it is switched to the three-phase continuous mode in responding to the hiccup period being extended to tₘₐₓ₁ and the target error value is greater than 0. The three-phase resonant circuit is avoided from frequently switching between two modes, and stable operation is achieved in various modes. With the controller, the operation range of the inductive zone is increased, thereby decreasing switching losses and improving overall system efficiency.

The method for controlling the three-phase resonant circuit provided by the embodiment of the present disclosure is described above, and an apparatus for executing the method for controlling the three-phase resonant circuit is described below.

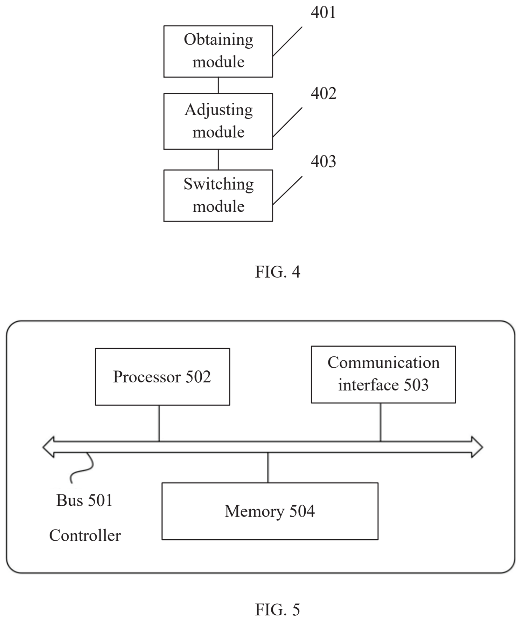

Reference is made to FIG. 4, which is a schematic structural diagram of an apparatus for controlling a three-phase resonant circuit according to an embodiment of the present disclosure. As shown in FIG. 4, the apparatus for controlling the three-phase resonant circuit includes:
an obtaining module 401, configured to obtain a target error value, where the target error value is a difference between a reference value of a predetermined electrical parameter of the three-phase resonant circuit and a sampled value of the predetermined electrical parameter of the three-phase resonant circuit;
an adjusting module 402, configured to adjust, in responding to the target error value being greater than or less than 0, an operation parameter of the three-phase resonant circuit to cause the target error value to be 0; and
a switching module 403, configured to switch, in responding to the target error value being greater than or less than 0, an operation mode of the three-phase resonant circuit from a current mode to a target mode after the operation parameter has been adjusted to a preset value, where the target mode includes one of: a three-phase continuous mode, a three-phase hiccup mode, a two-phase hiccup mode or a two-phase variable duty cycle mode.

In an embodiment, the current mode is the three-phase continuous mode, where the adjusting module 402 is configured to increase, in responding to the target error value being less than 0, an output frequency of the three-phase resonant circuit,
where the switching module 403 is configured to switch, in responding to the target error value being less than 0, the operation mode of the three-phase resonant circuit from the three-phase continuous mode to the three-phase hiccup mode after the output frequency of the three-phase resonant circuit has been increased to a preset frequency upper limit.

In an embodiment, the current mode is the three-phase continuous mode, where the adjusting module 402 is configured to decrease, in responding to the target error value being greater than 0, an output frequency of the three-phase resonant circuit, until the output frequency of the three-phase resonant circuit is decreased to a preset frequency lower limit or the target error value is less than or equal to 0.

In an embodiment, the current mode is the three-phase hiccup mode, where the adjusting module 402 is configured to shorten, in responding to the target error value being less than 0, a hiccup period of the three-phase resonant circuit in the three-phase hiccup mode,
where the switching module 403 is configured to switch, in responding to the target error value being less than 0, the operation mode of the three-phase resonant circuit from the three-phase hiccup mode to the two-phase hiccup mode after the hiccup period in the three-phase hiccup mode has been shortened to a first hiccup period lower limit.

In an embodiment, the current mode is the three-phase hiccup mode, where the adjusting module 402 is configured to extend, in responding to the target error value being greater than 0, a hiccup period of the three-phase resonant circuit in the three-phase hiccup mode,
where the switching module 403 is configured to switch, in responding to the target error value being greater than 0, the operation mode of the three-phase resonant circuit from the three-phase hiccup mode to the three-phase continuous mode after the hiccup period in the three-phase hiccup mode has been extended to a first hiccup period upper limit.

In an embodiment, the current mode is the two-phase hiccup mode, where the adjusting module 402 is configured to shorten, in responding to the target error value being less than 0, a hiccup period of the three-phase resonant circuit in the two-phase hiccup mode,
where the switching module 403 is configured to switch, in responding to the target error value being less than 0, the operation mode of the three-phase resonant circuit from the two-phase hiccup mode to the two-phase variable duty cycle mode after the hiccup period in the two-phase hiccup mode has been shortened to a second hiccup period lower limit.

In an embodiment, the current mode is the two-phase hiccup mode, where the adjusting module 402 is configured to extend, in responding to the target error value being greater than 0, a hiccup period of the three-phase resonant circuit in the two-phase hiccup mode,
where the switching module 403 is configured to switch, in responding to the target error value being greater than 0, the operation mode of the three-phase resonant circuit from the two-phase hiccup mode to the three-phase hiccup mode after the hiccup period in the two-phase hiccup mode has been extended to a second hiccup period upper limit.

In an embodiment, the current mode is the two-phase variable duty cycle mode, where the adjusting module 402 is configured to increase, in responding to the target error value being greater than 0, an output duty cycle of the three-phase resonant circuit,
where the switching module 403 is configured to switch, in responding to the target error value being greater than 0, the operation mode of the three-phase resonant circuit from the two-phase variable duty cycle mode to the two-phase hiccup mode after the output duty cycle of the three-phase resonant circuit has been increased to a preset duty cycle upper limit.

In an embodiment, the current mode is the two-phase variable duty cycle mode, where the adjusting module 402 is configured to decrease, in responding to the target error value being less than 0, an output duty cycle of the three-phase resonant circuit,
where the apparatus for controlling the three-phase resonant circuit further includes:
an executing module, configured to perform, in responding to the target error value being less than 0, pulse blocking on the three-phase resonant after the output duty cycle of the three-phase resonant circuit has been decreased to a preset duty cycle lower limit.

In an embodiment, in responding to the current mode being the three-phase continuous mode, the target mode is the three-phase hiccup mode;
in responding to the current mode being the three-phase hiccup mode, the target mode is the three-phase continuous mode or the two-phase hiccup mode;
in responding to the current mode being the two-phase hiccup mode, the target mode is the three-phase hiccup mode or the two-phase variable duty cycle mode; and
in responding to the current mode being the two-phase variable duty cycle mode, the target mode is the two-phase hiccup mode.

In the apparatus for controlling the three-phase resonant circuit disclosed in the present embodiment, in responding to the target error value being greater than or less than 0, the operation parameter of the three-phase resonant circuit is adjusted to cause the target error value to be 0. The operation mode of the three-phase resonant circuit is switched from the current mode to the target mode, in responding to the target error value being greater than or less than 0 when the operation parameter is adjusted to the preset value. The target mode includes the three-phase continuous mode, the three-phase hiccup mode, the two-phase hiccup mode or the two-phase variable duty cycle mode. That is, the target error value is adjusted by adjusting the output frequency, the three-phase hiccup period, the two-phase hiccup period or the output duty cycle in the two-phase operation mode for the three-phase resonant circuit, so that the closed-loop control of the three-phase resonant circuit is closed-loop controlled in the whole working operation range is achieved, the stable output of the three-phase resonant circuit is guaranteed to output stably, and a problem of increasing the switching loss and driving loss of the three-phase resonant circuit caused by controlling the three-phase resonant circuit totally based on the output frequency is solved.

A controller is further provided in an embodiment of the present disclosure. Reference is made to FIG. 5, which is a schematic structural diagram of a controller according to an embodiment of the present disclosure. The controller shown in FIG. 5 is only exemplary, and should not indicate any limitation to the function and application scope of the embodiments of the present disclosure.

As shown in FIG. 5, the controller may include a bus 501, a processor 502, a communication interface 503, and a memory 504. The processor 502, the memory 504, and the communication interface 503 communicate through a bus 501.

The bus 501 may be a peripheral component interconnect (PCI) bus, an extended industry standard architecture (EISA) bus, or the like. The bus may include an address bus, a data bus, a control bus, or the like. For ease of representation, the bus is shown in FIG. 5 as one thick line, which does not indicate that there is only one bus or the bus is of a single type.

The processor 502 may be one or more of processors such as a Microcontroller Unit (MCU) and a Digital Signal Processor (DSP).

The memory 504 may include a volatile memory, such as a random access memory (RAM). The memory 504 may also include a non-volatile memory, such as a read-only memory (ROM), a flash memory, or the like.

The memory 504 may be adopted to store software codes related to the method for controlling the three-phase resonant circuit, and the processor 502 may execute steps of the method for controlling the three-phase resonant circuit, or may call other units to implement corresponding functions.

A three-phase resonant circuit is further provided in the embodiment of the present disclosure, and the three-phase resonant circuit includes: a main circuit and a controller provided in the embodiment described above,
where the main circuit is connected to the controller; and
the main circuit may be a three-phase LLC circuit, a three-phase CLC circuit, or the like.

A charging pile is further provided in the embodiment of the present disclosure, and the charging pile includes the three-phase resonant circuit provided in the embodiment described above.

Although not shown in the figures, the charging pile may include a main body, a charging gun, a display screen, or the like, which are not repeated herein.

A computer program product is further provided in an embodiment of the present disclosure. The computer program product includes a computer-readable instruction, and the computer-readable instruction, when run on a controller, causes the controller to perform the method for controlling the three-phase resonant circuit according to any of the embodiments of the present disclosure.

A computer-readable storage medium is further provided in an embodiment of the present disclosure. The computer-readable storage medium stores one or more computer programs, and when the one or more computer programs are executed by a controller, the controller is able to implement the method for controlling the three-phase resonant circuit according to any of the embodiments of the present disclosure.

It should be noted that the apparatus embodiments described above are only illustrative. Units described as separate components may or may not be physically separate. A component shown as a unit may or may not be a physical unit, that is, may be located in one place, or may be distributed over multiple network units. Some or all of the modules may be selected as needed to achieve the objective of the solution according to the embodiments. Moreover, in the drawings of the apparatus embodiments of the present disclosure, connection relationship between modules indicates that the modules are connected in communication, which may be implemented as one or more communication buses or signal lines.

Through the description of the above embodiments, those skilled in the art can clearly understand that the present disclosure may be implemented by means of a combination of software and necessary general hardware. Apparently, the present disclosure may also be implemented by special hardware including a special integrated circuit, a special Central Processing Unit (CPU), a special memory, a special device and the like. Generally, all functions implemented by a computer program may be easily implemented by hardware. In addition, specific hardware used for implementing the same function may has various structures. For example, the hardware may be an analog circuit, a digital circuit, a special circuit or the like. However, for the present disclosure, implementation by a software program is a preferred embodiment in many cases. Based on this understanding, the technical solutions of the present disclosure essentially or a part of the technical solutions that contributes to the conventional technology may be implemented as a software product. The computer software product may be stored in a readable storage medium, such as a floppy disk, a U disk, a mobile hard disk, a read-only memory (ROM), a random access memory (RAM), a magnetic disk or an optical disk. The computer software product includes several instructions executed by a computer device (may be a personal computer, a training device, a network device and the like) to implement the method according to the embodiments of the present disclosure.

All or part of the above embodiments may be implemented by software, hardware, firmware or any combination thereof. When implemented by software, all or some of the functions may be implemented in a form of a computer program product.

The computer program product includes one or more computer instructions. When the computer program instructions are loaded and executed on a computer, all or part of the processes or functions described in the embodiments of the present disclosure are generated. The computer may be a general computer, a special computer, a computer network, or other programmable devices. The computer instructions may be stored in a computer-readable storage medium or transmitted from a computer-readable storage medium to another computer-readable storage medium. For example, the computer instructions may be transmitted from a website site, a computer, a training device or a data center to another website site, another computer, another training device or another data center in a wired manner (for example, through a coaxial cable, an optical fiber, and a digital subscriber line (DSL)) or in a wireless manner (for example, through infrared, radio, microwave, or the like). The computer-readable storage medium may be any available medium capable of being stored by a computer or a data storage device including one or more training devices or data centers integrated by the available medium. The available medium may be a magnetic medium (for example, a floppy disk, a hard disk or a magnetic tape), an optical medium (for example, a digital video disk (DVD)), a semiconductor medium (for example, a solid state disk (SSD)), or the like.

## Claims

1. A method for controlling a three-phase resonant circuit, comprising:
obtaining a target error value, wherein the target error value is a difference between a reference value of a predetermined electrical parameter of the three-phase resonant circuit and a sampled value of the predetermined electrical parameter of the three-phase resonant circuit;
adjusting, in responding to the target error value being greater than or less than 0, an operation parameter of the three-phase resonant circuit to cause the target error value to be 0; and
switching, in responding to the target error value being greater than or less than 0, an operation mode of the three-phase resonant circuit from a current mode to a target mode after the operation parameter has been adjusted to a preset value, wherein the target mode comprises one of a three-phase continuous mode, a three-phase hiccup mode, a two-phase hiccup mode or a two-phase variable duty cycle mode.

2. The method for controlling the three-phase resonant circuit according to claim 1, wherein the current mode is the three-phase continuous mode, and the adjusting, in responding to the target error value being greater than or less than 0, an operation parameter of the three-phase resonant circuit comprises:
increasing, in responding to the target error value being less than 0, an output frequency of the three-phase resonant circuit,
wherein the switching, in responding to the target error value being greater than or less than 0, an operation mode of the three-phase resonant circuit from a current mode to a target mode after the operation parameter has been adjusted to a preset value comprises:
switching, in responding to the target error value being less than 0, the operation mode of the three-phase resonant circuit from the three-phase continuous mode to the three-phase hiccup mode after the output frequency of the three-phase resonant circuit has been increased to a preset frequency upper limit.

3. The method for controlling the three-phase resonant circuit according to claim 1, wherein the current mode is the three-phase continuous mode, and the adjusting, in responding to the target error value being greater than or less than 0, an operation parameter of the three-phase resonant circuit comprises:
decreasing, in responding to the target error value being greater than 0, an output frequency of the three-phase resonant circuit, until the output frequency of the three-phase resonant circuit is decreased to a preset frequency lower limit or the target error value is less than or equal to 0.

4. The method for controlling the three-phase resonant circuit according to claim 1, wherein the current mode is the three-phase hiccup mode, and the adjusting, in responding to the target error value being greater than or less than 0, an operation parameter of the three-phase resonant circuit comprises:
shortening, in responding to the target error value being less than 0, a hiccup period of the three-phase resonant circuit in the three-phase hiccup mode,
wherein the switching, in responding to the target error value being greater than or less than 0, an operation mode of the three-phase resonant circuit from a current mode to a target mode after the operation parameter has been adjusted to a preset value comprises:
switching, in responding to the target error value being less than 0, the operation mode of the three-phase resonant circuit from the three-phase hiccup mode to the two-phase hiccup mode after the hiccup period in the three-phase hiccup mode has been shortened to a first hiccup period lower limit.

5. The method for controlling the three-phase resonant circuit according to claim 1, wherein the current mode is the three-phase hiccup mode, and the adjusting, in responding to the target error value being greater than or less than 0, an operation parameter of the three-phase resonant circuit comprises:
extending, in responding to the target error value being greater than 0, a hiccup period of the three-phase resonant circuit in the three-phase hiccup mode,
wherein the switching, in responding to the target error value being greater than or less than 0, an operation mode of the three-phase resonant circuit from a current mode to a target mode after the operation parameter has been adjusted to a preset value comprises:
switching, in responding to the target error value being greater than 0, the operation mode of the three-phase resonant circuit from the three-phase hiccup mode to the three-phase continuous mode after the hiccup period in the three-phase hiccup mode has been extended to a first hiccup period upper limit.

6. The method for controlling the three-phase resonant circuit according to claim 1, wherein the current mode is the two-phase hiccup mode, and the adjusting, in responding to the target error value being greater than or less than 0, an operation parameter of the three-phase resonant circuit comprises:
shortening, in responding to the target error value being less than 0, a hiccup period of the three-phase resonant circuit in the two-phase hiccup mode,
wherein the switching, in responding to the target error value being greater than or less than 0, an operation mode of the three-phase resonant circuit from a current mode to a target mode after the operation parameter has been adjusted to a preset value comprises:
switching, in responding to the target error value being less than 0, the operation mode of the three-phase resonant circuit from the two-phase hiccup mode to the two-phase variable duty cycle mode after the hiccup period in the two-phase hiccup mode has been shortened to a second hiccup period lower limit.

7. The method for controlling the three-phase resonant circuit according to claim 1, wherein the current mode is the two-phase hiccup mode, and the adjusting, in responding to the target error value being greater than or less than 0, an operation parameter of the three-phase resonant circuit comprises:
extending, in responding to the target error value being greater than 0, a hiccup period of the three-phase resonant circuit in the two-phase hiccup mode,
wherein the switching, in responding to the target error value being greater than or less than 0, an operation mode of the three-phase resonant circuit from a current mode to a target mode after the operation parameter has been adjusted to a preset value comprises:
switching, in responding to the target error value being greater than 0, the operation mode of the three-phase resonant circuit from the two-phase hiccup mode to the three-phase hiccup mode after the hiccup period in the two-phase hiccup mode has been extended to a second hiccup period upper limit.

8. The method for controlling the three-phase resonant circuit according to claim 1, wherein the current mode is the two-phase variable duty cycle mode, and the adjusting, in responding to the target error value being greater than or less than 0, an operation parameter of the three-phase resonant circuit comprises:
increasing, in responding to the target error value being greater than 0, an output duty cycle of the three-phase resonant circuit,
wherein the switching, in responding to the target error value being greater than or less than 0, an operation mode of the three-phase resonant circuit from a current mode to a target mode after the operation parameter has been adjusted to a preset value comprises:
switching, in responding to the target error value being greater than 0, the operation mode of the three-phase resonant circuit from the two-phase variable duty cycle mode to the two-phase hiccup mode after the output duty cycle of the three-phase resonant circuit has been increased to a preset duty cycle upper limit.

9. The method for controlling the three-phase resonant circuit according to claim 1, wherein the current mode is the two-phase variable duty cycle mode, and the adjusting, in responding to the target error value being greater than or less than 0, an operation parameter of the three-phase resonant circuit comprises:
decreasing, in responding to the target error value being less than 0, an output duty cycle of the three-phase resonant circuit,
wherein the method for controlling the three-phase resonant circuit further comprises:
performing, in responding to the target error value being less than 0, pulse blocking on the three-phase resonant after the output duty cycle of the three-phase resonant circuit has been decreased to a preset duty cycle lower limit.

10. The method for controlling the three-phase resonant circuit according to claim 1, wherein
in responding to the current mode being the three-phase continuous mode, the target mode is the three-phase hiccup mode;
in responding to the current mode being the three-phase hiccup mode, the target mode is the three-phase continuous mode or the two-phase hiccup mode;
in responding to the current mode being the two-phase hiccup mode, the target mode is the three-phase hiccup mode or the two-phase variable duty cycle mode; and
in responding to the current mode being the two-phase variable duty cycle mode, the target mode is the two-phase hiccup mode.

11. A controller, comprising: at least one processor and a memory connected to the processor, wherein
the memory is configured to store a computer program; and
the processor is configured to execute the computer program to enable the controller to implement the method for controlling the three-phase resonant circuit according to any one of claims 1 to 10.

12. A three-phase resonant circuit, comprising: a main circuit and the controller according to claim **11,**
wherein the main circuit is connected to the controller.

13. A charging pile, comprising the three-phase resonant circuit according to claim 12.
